# EUROPEAN PATENT APPLICATION

(11) **EP 3 683 224 A1**
(43) Date of publication of application: **22.07.2020**
(21) Application number: 18857284.6
(22) Date of filing: 12.09.2018
(51) Int. Cl.: C07F 15/02, C01B 39/02, C01B 39/52, B01J 20/20, B01J 20/30, B01J 29/072, B01J 23/745, B82Y 30/00, B82Y 40/00

(54) **IRON ZEOLITIC IMIDAZOLATE FRAMEWORK, PRODUCTION METHOD THEREOF AND NANCOMPOSITE DERIVED FROM SAME**

(30) Priority: 12.09.2017 ES 201731106
(71) Applicant: Universitat de València, 46010 Valencia (ES)
(72) Inventor: MINGUEZ ESPALLARGAS, Guillermo, 46010 Valencia (ES); LOPEZ CABRELLES, Javier, 46010 Valencia (ES); ROMERO PASCUAL, Jorge, 46010 Valencia (ES); CORONADO MIRALLES, Eugenio, 46010 Valencia (ES)
(74) Representative: Elzaburu S.L.P.
(86) International application number: PCT/ES2018/070593
(87) International publication number: WO 2019/053312

(57) **Abstract**

The present invention belongs to the field of electrocatalysts, more specifically to electrocatalysts derived from metal-organic frameworks. In particular, the present invention refers to an iron zeolitic imidazolate framework, to the process for producing it, a graphite carbon nanocomposite, and iron nanoparticles, as well as to the process for obtaining said nanocomposite from the iron zeolitic imidazolate framework. Furthermore, the present invention refers to the use of the nanocomposite as a catalyst.

## Description

### Field of the invention

The present invention belongs to the field of electrocatalysts, more specifically to electrocatalysts derived from metal-organic frameworks. In particular, the present invention refers to an iron zeolitic imidazolate framework, the process for producing it, a graphite carbon nanocomposite, and iron nanoparticles, as well as the process of obtaining said nanocomposite from the iron zeolitic imidazolate framework. The present invention also refers to the use of the nanocomposite as a catalyst.

### Background

The electrochemistry of oxygen involves the reactions of oxygen reduction (ORR) and evolution (OER), which are the two most important reactions for electrochemical energy storage and conversion technologies, including fuel cells, metal batteries, and water electrolysis. For these electrochemical applications, highly active and stable electrocatalysts are needed for the ORR and OER. The noble metals are usually good electrocatalysts for these applications. For example, platinum-based nanocomposites are the most effective commercial electrocatalysts for the ORR, while precious nanocomposites based on ruthenium and iridium are commonly used in the OER process. However, the low stability, scarcity, and high cost of these noble metal-based oxygen electrocatalysts prevent their large-scale implementation. Therefore, it is urgent to develop highly effective and durable alternatives with a low cost, ideally with a bifunctional capacity for both the ORR and OER.

Over the past decade, a wide range of alternative materials, including nanocarbons, metal oxides, carbides/nitrides and their composites have been found to be electroactive for electrochemical oxygen processes. Among them, the nanocarbons have shown promising catalytic activity as well as stability. Furthermore, the catalytic properties could be improved by the introduction of heteroatoms, including nitrogen, sulphur, boron, etc. In particular, several nitrogen-doped graphitic nanocarbons, including carbon nanotubes (CNCDs), graphene, mesoporous carbon and its nanocomposites, have been described as possible alternatives to the platinum catalysts. It is believed that the improved embodiment is related to the modified electronic structure and the carbon defects induced by the heteroatoms. In a few cases, however, excellent activity and durability have been found that is comparable to that of the platinum/carbon catalysts.

Recently, metal-organic frameworks have emerged as a new platform for the synthesis of new nanocarbon compounds. As a subclass of metal-organic frameworks, zeolitic imidazolate frameworks, known as ZIFs from their English name, are excellent precursors for nanocarbon electrocatalysts in view of the existence of abundant carbon and nitrogen species. However, nanocomposites derived from metal-organic frameworks are mostly microporous and of poor graphitic grade, which is considered as unfavourable for the transport of ions and electrons. Although many nanocarbon derivatives of metal-organic frameworks have been investigated as electrocatalysts, most of them exhibit unsatisfactory electrochemical activity.

ZIFs are a type of metal-organic framework that topologically has the same morphology as zeolites. Zeolites are porous aluminosilicate minerals that are found in nature but are also produced industrially on a large scale due to their commercial interest as adsorbents and catalysts.

ZIFs are composed of transition metal ions that are tetrahedrally coordinated and connected by imidazolate ligands. ZIFs are said to have zeolite topologies since the metal-imidazole-metal angle is similar to the 145° Si-O-Si angle in zeolites. ZIFs are usually prepared by solvothermal or hydrothermal techniques, wherein the crystals grow slowly by heating a solution of a hydrated metal salt, an imidazolate, a solvent, and a base.

US8314245 B2 describes different zinc ZIFs obtained by heating a tetrahydrated zinc nitrate solution and imidazole or an imidazole derivative in a solvent at temperatures between 85 and 150 °C for 48 to 96 hours.

Bao Yu Xia et al. describe the so-called cobalt ZIF-67, obtained from a solution of cobalt nitrate hexahydrate and 2-methylimidazole in a mixture of 1:1 methanol:ethanol (Nature Energy, 2016, 1, 15006). Bao Yu Xia et al. also describe the use of this ZIF-67 as a precursor of an electrocatalyst based on nitrogen-doped carbon nanotube structures.

Zhao et al. describe a non-porous iron and imidazolate material with both tetrahedral and octahedral centres that has a structure that cannot be described as a zeolite (and therefore cannot be considered a zeolitic framework) which is mixed with a zinc ZIF-8 to obtain a catalyst (Chemical Science 2012, 3, 11, 3200-3205).

There is still a need to find new, more efficient electrocatalysts that can be equated with the expensive platinum catalysts.

### Description of the invention

The present invention provides a new carbon and iron nanocomposite with excellent electrocatalytic behaviour. The inventors of the present invention have obtained an electrocatalyst from an iron zeolitic framework not described to date. The inventors have also found an advantageous process to obtain said iron zeolitic framework, a precursor of a nanocomposite with excellent electrocatalytic activity. Said advantageous process is cleaner and more environmentally friendly as it does not use solvents and therefore does not generate waste.

In addition, the process to obtain the nanocomposite of the present invention from the zeolitic framework of the present invention is fast and economical, since it is carried out at lower temperatures and in shorter timeframes than for other state-of-the-art processes.

Therefore, as a first aspect, the present invention refers to a zeolitic framework comprising the general structure A-B-A wherein A is iron, and B is a compound of formula I 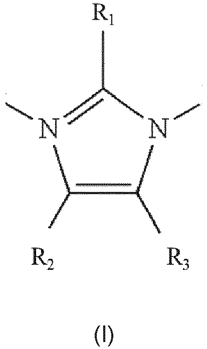
wherein R₁, R₂ and R₃ are independently hydrogen, C₁₋₄ alkyl, halo, cyano, or nitro,
wherein R₂ and R₃ are C₁₋₄ alkyl, R₂ and R₃ can be joined together to form a cycle of 3 to 7 carbons.

In a preferred embodiment, the zeolitic framework of the first aspect is isolated. Preferably, the zeolitic framework of the first aspect of the present invention has a purity of at least 80 %, preferably at least 85 %, more preferably of at least 90 %, and even more preferably of at least 95 %. Preferably, the zeolitic framework of the first aspect is isolated and has a purity of at least 99 %. Preferably, the zeolitic framework of the first aspect is isolated and has a purity of 100 %.

In a preferred embodiment of the first aspect of the present invention, the compound of formula I is imidazolate or 2-methylimidazolate. More preferably, the compound of formula I is 2-methylimidazolate.

In a preferred embodiment, the zeolitic framework of the first aspect has a SOD zeolitic topology. In a preferred embodiment, the zeolitic framework of the first aspect has the crystallographic structure of the ZIF-8.

In a preferred embodiment of the first aspect, the zeolitic framework is isolated, has a purity of at least 95 %, comprises the general structure A-B-A wherein A is iron, and B is 2-methylimidazole, has a SOD zeolitic topology, and the crystallographic structure of the ZIF-8.

In a preferred embodiment of the first aspect, the zeolitic framework has a micropore volume, calculated by means of adsorption assays, greater than 0.15 cm³·g⁻¹, preferably greater than 0.3 cm³·g⁻¹.

In a preferred embodiment of the first aspect, the zeolitic framework has a BET area greater than 100 m²/g, preferably greater than 200 m²/g, and more preferably greater than 400 m²/g, calculated by adsorption assays.

A second aspect of the present invention refers to a process for obtaining the zeolitic framework of the first aspect, comprising the following steps:
a. mixing ferrocene and a compound of formula I as described in the first aspect, preferably 2-methylimidazole, in the presence of a template ligand,
b. heating the sealed mixture of step (a) to a temperature of between 80 and 250 °C for at least 12 hours, preferably for at least 24 hours.

As used here, the term "template ligand" refers to a compound that is not incorporated in the zeolitic framework structure and influences the reaction kinetics between ferrocene and the compound of formula I, which is preferably 2-methylimidazole. In a preferred embodiment of the process of the second aspect, the template ligand is solid at room temperature (25 °C). Preferably, the template ligand is an aromatic heterocycle. More preferably, the template ligand is an aromatic heterocycle wherein the heteroatom is nitrogen. Even more preferably, the template ligand is a pyridine, a pyridine derivative, or an imidazole derivative. More preferably, the template ligand is a bipyridine, a bipyridine derivative, or a benzimidazole derivative. In a preferred embodiment of the process of the second aspect, the template ligand is 4.4-bipyridine. In a preferred embodiment of the process if the second aspect, the template ligand is 2-methylbenzimidazole.

In another preferred embodiment of the process of the second aspect, before heating the mixture of step (a), said mixture is sealed in a container under vacuum. Preferably, the vacuum is at least 10⁻² mbar, preferably at least 10⁻³ mbar. Preferably, the mixture of step (a) is prepared in the absence of a solvent.

In a preferred embodiment of the process of the second aspect, the molar ratio of the template ligand:formula I compound in the mixture of step (a) is 0. In another preferred embodiment of the process of the second aspect, the molar ratio of the template ligand:formula I compound in the mixture of step (a) is greater than 0.1, preferably greater than 0.5, more preferably greater than 1.

In a preferred embodiment of the process of the second aspect, the molar ratio 4.4-bipyridine:2-methylimidazole in the mixture of step (a) is at least 1. In a preferred embodiment of the process of the second aspect, the molar ratio 2-methylbenzimidazole:2-methylimidazole in the mixture of step (a) is at least 1.

In another preferred embodiment of the process of the second aspect, step (b) is carried out at a temperature between 110 and 200 °C, preferably step (b) is carried out at a temperature between 140 and 160 °C.

In another preferred embodiment of the process of the second aspect, step (b) lasts between 2 and 6 days, and, preferably, step (b) lasts between 3.5 and 4.5 days.

In a preferred embodiment, the process of the second aspect of the present invention comprises the following steps:
(a) mixing ferrocene with 2-methylimidazole in the presence of 4.4-bipyridine, wherein the molar ratio 4.4-bipyridine:2-methylimidazole is at least 1,
(b) sealing the mixture of step (a) under a vacuum of at least 10⁻² mbar, and
(c) heating the sealed mixture of step (b) between 110 and 200 °C for 2 to 6 days.

In a third aspect, the present invention refers to a nanocomposite comprising:
(i) a graphitic carbon matrix and
(ii) between 0.1 % and 3 % by weight, preferably between 0.3 % and 2 % by weight, more preferably between 0.7 % and 0.9 % by weight of iron nanoparticles with respect to the total weight of the nanocomposite,
wherein said iron nanoparticles have a diameter of between 1 and 60 nm, preferably between 5 and 45 nm, more preferably between 10 and 30 nm,
wherein said nanocomposite comprises:
between 70 and 95 % by weight, preferably between 80 and 94 % by weight, more preferably between 90 and 92 % by weight of carbon,
between 3 and 20 % by weight, preferably between 5 and 15 % by weight, more preferably between 7 and 9 % by weight of oxygen, and
between 0.2 and 5 % by weight, preferably between 0.5 and 3 % by weight, more preferably between 0.8 and 1.2 % by weight of nitrogen,
with respect to the total weight of the nanocomposite, and
wherein said nanocomposite has a current density in the oxygen evolution reaction (OER) greater than 200 mA/cm² in KOH 1M, preferably greater than 230 mA/cm² in KOH 1M, and more preferably greater than 300 mA/cm² in KOH 1M.

Preferably, the nanocomposite of the third-aspect has a current density in the hydrogen evolution reaction (HER) less than -300 mA/cm² in KOH 1M, preferably less than -430 mA/cm² in KOH 1M, and more preferably less than -500 mA/cm² in KOH 1M.

The current density of the nanocomposite of this invention was analysed in the HER reaction at -0.75 V vs RHE and the OER reaction at 1.8 V vs RHE.

The current density of a nanocomposite can be calculated in the HER reaction or the OER reaction, and in different media, so that the current density for the same nanocomposite for the same reaction is not the same depending on the medium in which it is calculated. When the current density in the OER reaction is calculated in KOH 0.1 M, the nanocomposite of the third aspect of this invention has a current density greater than 50 mA/cm², preferably greater than 100 mA/cm², and more preferably greater than 180 mA/cm². When the current density in the HER reaction is calculated in KOH 0.1 M, the nanocomposite of the third aspect of the present invention has a current density less than -100 mA/cm², preferably has a current density less than -140 mA/cm², and more preferably has a current density less than -200 mA/cm². When the current density in the HER reaction is calculated in H₂SO₄ 1 M, the nanocomposite of the third aspect of the present invention has a current density less than -100 mA/cm², preferably has a current density of less than -200 mA/cm², and more preferably has a current density of less than -250 mA/cm². When the current density in the HER reaction is calculated in H₂SO₄ 0.5 M, the nanocomposite of the third aspect of the present invention has a current density less than -100 mA/cm², preferably has a current density of less than -140 mA/cm², and more preferably has a current density of less than -200 mA/cm². When the current density in the HER reaction is calculated in a buffer at pH 7, the nanocomposite of the third aspect of this invention has a current density less than -20 mA/cm², preferably it has a current density less than -25 mA/cm², and more preferably it has a current density less than -40 mA/cm².

In a preferred embodiment, the nanocomposite of the third aspect of the present invention has an initial hydrogen evolution reaction (HER) of more than -0.5 V (vs RHE in KOH 1M), or more than -0.42 V (vs RHE in KOH 0.1 M), or more than -0.62 V (vs RHE in H₂SO₄ 1 M), or more than -0.75 V (vs RHE in H₂SO₄ 0.5 M), or more than -0.85 V (vs RHE in a buffer solution of pH 7). In a more preferred embodiment, the nanocomposite of the third aspect of the present invention has an initial hydrogen evolution reaction (HER) of more than -0.45 V (vs RHE in KOH 1M), or more than -0.35 V (vs RHE in KOH 0.1 M), or more than -0.57 V (vs RHE in H₂SO₄ 1M), or more than -0.70 V (vs RHE in H₂SO₄ 0.5 M), or more than -0.80 V (vs RHE in pH 7 buffer solution). In an even more preferred embodiment, the nanocomposite of the third aspect of the present invention has an initial hydrogen evolution reaction (HER) of more than -0.40 V (vs RHE in KOH 1M), or more than -0.32 V (vs RHE in KOH 0.1 M), or more than -0.53 V (vs RHE in H₂SO₄ 1 M), or more than -0.67 V (vs RHE in H₂SO₄ 0.5 M), or more than -0.78 V (vs RHE in buffer solution pH 7).

In a preferred embodiment, the nanocomposite of the third aspect of the present invention has an initial oxygen evolution reaction (OER) of less than 1.75 V (vs RHE in KOH 1M or KOH 0.1 M). Preferably, the nanocomposite of the third aspect of this invention has an initial oxygen evolution reaction (OER) of less than 1.70 V (vs RHE in KOH 1M or KOH 0.1 M). More preferably, the nanocomposite of the third aspect of the present invention has an initial oxygen evolution reaction (OER) of less than 1.65 V (vs RHE in KOH 1M or KOH 0.1 M).

In a preferred embodiment, the nanocomposite of the third aspect of the present invention has a Tafel slope of less than 57 mV per decade (in KOH 1M) or less than 68 mV per decade (in KOH 0.1M). Preferably, the nanocomposite of the third aspect of the present invention has a Tafel slope of less than 47 mV per decade (in KOH 1M) or less than 58 mV per decade (in KOH 0.1M). More preferably, the nanocomposite of the third aspect of the present invention has a Tafel slope of less than 40 mV per decade (in KOH 1M) or less than 50 mV per decade (in KOH 0.1M).

In a preferred embodiment, the nanocomposite of the third aspect of the present invention has a pore size of 0.5 to 15 nm, preferably from 1 to 10 nm, and more preferably from 3 to 5 nm, calculated by adsorption assays.

In a preferred embodiment, the nanocomposite of the third aspect of the present invention has a pore volume of 0.1 to 2 cm³ g⁻¹, preferably from 0.5 to 1.5 cm³ g⁻¹, and more preferably from 0.9 to 1.1 cm³ g⁻¹, calculated by adsorption assays.

In a preferred embodiment, the nanocomposite of the third aspect of the present invention has a micropore volume of 0.01 to 1 cm³ g⁻¹, preferably from 0.05 to 0.5 cm³ g⁻¹, more preferably from 0.09 to 0.11 cm³ g⁻¹, calculated by adsorption assays.

In a preferred embodiment of the third aspect of the present invention, the zeolitic framework has a BET area greater than 100 m²/g, preferably greater than 200 m²/g, and more preferably greater than 400 m²/g, calculated by adsorption assays. In a preferred embodiment, the nanocomposite of the third aspect of the present invention has a BET area between100 and 1,200 m²/g, preferably between 200 and 800 m²/g, and more preferably between 400 and 600 m²/g, calculated by adsorption assays.

In a preferred embodiment, the nanocomposite of the third aspect comprises a graphite carbon matrix and between 0.3 and 2 % by weight of iron nanoparticles with respect to the total weight of the nanocomposite, wherein said iron nanoparticles have a diameter of between 5 and 45 nm, wherein said nanocomposite comprises between 80 and 94 % by weight of carbon, between 5 and 15 % by weight of oxygen, and between 0.5 and 3 % by weight of nitrogen, with respect to the total weight of nanocomposite, wherein said nanocomposite has a current density in the hydrogen evolution reaction (HER) less than -430 mA/cm² in KOH 1M and a current density in the OER reaction greater than 230 mA/cm² in KOH 1M, and wherein said nanocomposite has a BET area greater than 200 m²/g and a micropore volume of 0.05 to 0.5 cm³ g⁻¹.

A fourth aspect of the present invention refers to a process for obtaining a nanocomposite according to the third aspect, comprising the following steps:
a. obtaining a zeolitic framework comprising the general structure A-B-A wherein A is iron, and B is a compound of formula I according to the first aspect, through a process according to the second aspect, and
b. heating the zeolitic framework obtained in step (a) at a temperature between 500 and 900 °C, preferably between 600 and 800 °C, more preferably between 680 and 720 °C, during at least 1 hour, preferably for at least 2 hours, more preferably for at least 3 hours.

In a preferred embodiment of the process of the fourth aspect, during step (b) the zeolitic framework obtained in step (a) is heated at a temperature between 500 and 900 °C for between 2 and 5 hours, preferably for between 3 and 4 hours.

In a preferred embodiment of the process of the fourth aspect, before step (b), the zeolitic framework of step (a) is introduced in a solvent, and an inert atmosphere is created, preferably with nitrogen. The solvent is preferably acetonitrile.

In a fifth aspect, the present invention refers to the nanocomposite obtained by the process according to the fourth aspect of the invention.

In a sixth aspect, the present invention refers to the use of the nanocomposite according to the third or fifth aspect, as a catalyst. The nanocomposite of the present invention is preferably used as a catalyst in proton exchange membrane fuel cells or PEMFC from the term in English.

### Description of the figures

**Figure 1****.** A and B. Photographs made using an electronic scanning microscope of the iron zeolitic imidazolate framework crystals of the present invention. C. Photography made with an optical microscope of the crystals of the iron zeolitic imidazolate framework of the present invention. The scale bar is 300 microns in A and 500 microns in B.

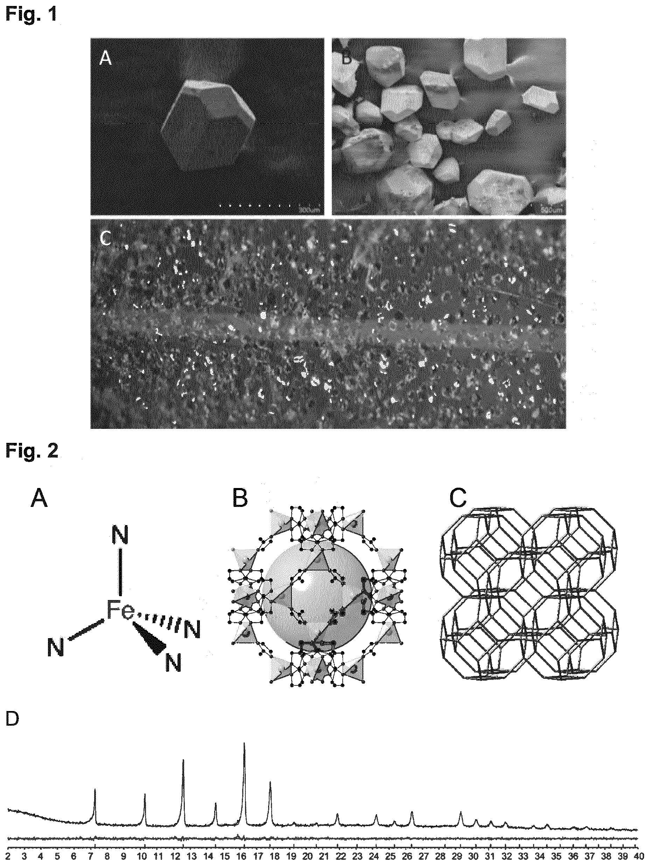

**Figure 2****.** A. A tetrahedral coordination environment of the iron atoms (II) in the structure of the iron zeolitic imidazolate framework of this invention. B. Representation of a pore and channel belonging to the structure of the iron zeolitic imidazolate framework of the present invention wherein the iron atoms have been represented in the form of tetrahedra, the carbons and nitrogens are represented as points, and the sphere represents the empty cavity or pore of the material. C. Representation of the SOD-type zeolite structure. D. X-ray diffractogram of the iron zeolitic imidazolate framework of the present invention (peak line) and difference [(I_{obs}-I_{cald})] (bottom line) of the Pawley refinement (range of 2θ: 4.0- 40.0 °).
**Figure 3****.** A. Graphical product representation of the magnetic susceptibility for the temperature versus temperature. B. Graphical representation of the magnetisation versus the field at 2K. The dotted line shows the Brillouin function for an S = 2 system without magnetic interactions.
**Figure 4****.** X-ray diffractogram of the nanocomposite of the present invention.
**Figure 5****.** Photographs taken by a high-resolution transmission electron microscope of the nanocomposite of this invention. The scale bar length is 20 nm, 2 nm, 10 nm, and 10 nm in the A to D photographs, respectively.

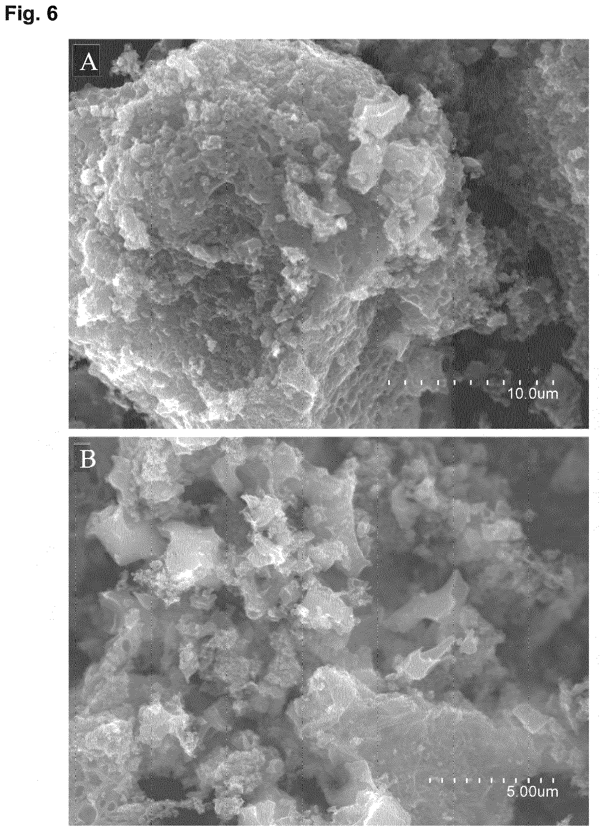

**Figure 6****.** Photographs of the nanocomposite of this invention made by a scanning electron microscope.
**Figure 7****.** X-ray spectroscopy signal (XPS) of the iron in the nanocomposite of this invention.
**Figure 8****.** XPS signal of the nitrogen in the nanocomposite of the present invention.
**Figure 9****.** XPS signal of the carbon in the nanocomposite of the present invention.
**Figure 10****.** N₂ isotherm of the nanocomposite of the present invention.
**Figure 11****.** CO₂ isotherm of the nanocomposite of the present invention.
**Figure 12****.** The pore distribution of the nanocomposite of the present invention.
**Figure 13****.** The oxygen evolution reaction (OER) of the nanocomposite of the present invention (black) and the nickel foam (grey) in KOH 0.1 M.
**Figure 14****.** OER of the nanocomposite of the present invention (black) and the nickel foam (grey) in KOH 1 M.
**Figure 15****.** The hydrogen evolution reaction (HER) of the nanocomposite of the present invention (black) and the nickel foam (grey) in KOH 0.1 M.
**Figure 16****.** The HER of the nanocomposite of the present invention (black) and the nickel foam (grey) in KOH 1 M.
**Figure 17****.** The HER of the nanocomposite of the present invention (black) the carbon felt (grey) in H₂SO₄ 0.5 M.
**Figure 18****.** The HER of the nanocomposite of the present invention (black) and the carbon felt (grey) in H₂SO₄ 1 M.
**Figure 19****.** The Tafel slopes of the nanocomposite of the present invention in the two basic media.
**Figure 20****.** The galvanostatic stability of the nanocomposite of the present invention in KOH 0.1 M.
**Figure 21****.** The galvanostatic stability of the nanocomposite of the present invention in KOH 1 M.
**Figure 22****.** The potentiostatic stability of the nanocomposite of the present invention in KOH 1 M.
**Figure 23****.** The N₂ adsorption isotherm of the zeolitic framework of this invention, measured at 77 K.
**Figure 24****.** The CO₂ adsorption isotherm of the zeolitic framework of this invention, measured at 298 K.

### Examples

The following examples illustrate the present invention and demonstrate the advantageous properties of the nanocomposites of the present invention, as well as the method of the present invention.

### Example 1: Synthesis of the iron ZIF:

Ferrocene (30 mg, 0.16 mmol), 4.4-bipyridine (50 mg, 0.32 mmol) and 2-methylimidazole (20 mg, 0.24 mmol) are used for the iron ZIF synthesis. These three solids are mixed and sealed under vacuum in a tube. The mixture is heated to 150 °C for 4 days to obtain yellow crystals suitable for single-crystal X-ray diffraction (Figure 1). The obtained product is allowed to cool, and the tube is opened. The crystals are cleaned by removing the reagents that have not reacted with the acetonitrile and benzene. The purity of the final solid is determined by X-ray powder diffraction. All the reagents are commercially available and have been used without further purification.

In an alternative synthesis process, ferrocene, 2-methylbenzimidazole (as a template ligand), and 2-methylimidazole are used, and essentially the same steps are followed.

### Example 2: Iron ZIF analysis by X-ray powder diffraction.

The crystallographic studies at 120 K reveal that the yellow crystals are isostructural with the ZIF-8 (a = 17.1794 Å), with the spatial group I-43m. The metallic centres, Fe(II), are located in a tetrahedral coordination environment, connected by N-C-N bridges created by the ligands 2-methylimidazole, as shown in Figure 2. The Fe-N distances are 2.032 Å, and the Fe-Fe distances are 6.069 Å. The Pawley refinement of the X-ray powder diffractogram (XRPD) obtained shows a single crystalline phase since a WPR factor (weighted powder profile R-factor) of 0.01462 is obtained. This WPR indicates that the error in the diffractogram profile is very low (1.46 %), which implies that there is only one phase: the iron ZIF. Furthermore, a GOF factor (the "goodness of fit") is obtained close to 1: from 1.103. The intensity and width of the peaks can be seen in figure 2D, which denotes a high crystallinity. With the scanning electron microscope (SEM), the morphology of the crystals was studied, showing crystals with very well-defined faces, about 300 microns in size (Figure 1).

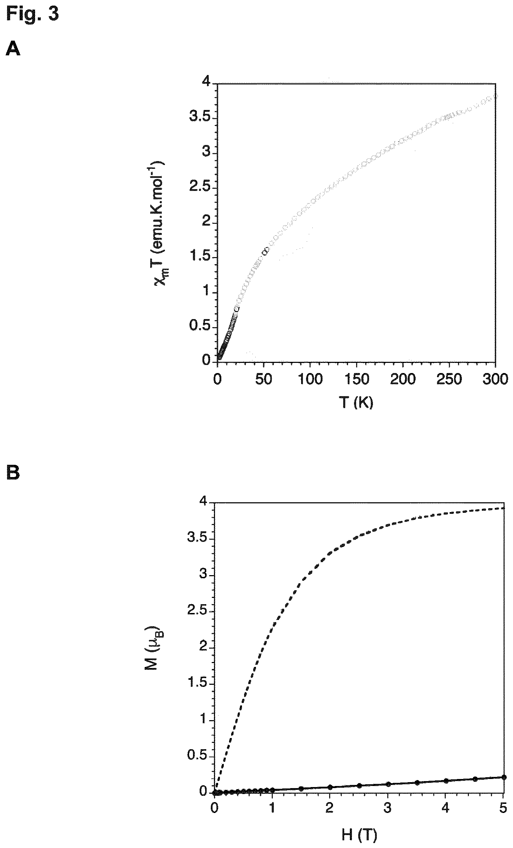

The N-C-N bridges between the iron centres allow a magnetic exchange, and the Fe(II) tetrahedral environment that provides S = 2 for each metallic centre enables the appearance of magnetic sorting. As we can see in Figure 3, wherein the product of the magnetic susceptibility (xm) with the temperature (T) versus temperature is represented, χmT decreases as it cools down, indicating the presence of anti-ferromagnetic interactions between the Fe-Fe centres through the imidazolate bridges. The anti-ferromagnetic nature of the compound is also observed in the magnetisation graph, wherein a saturation value much lower than expected can be seen for the Fe(II) paramagnetic centres.

### Example 3: Synthesis of the nanocomposite.

For the synthesis of the nanocomposite, the iron ZIF was introduced into a vessel with acetonitrile to avoid contact with oxygen in the atmosphere. The inert atmosphere of nitrogen was created, and the ramp was made, in which it is heated to 700 °C for 3.5 h, with a ramp up and down of 2 °C/min. Once heated, the nanocomposite obtained from the heating is washed with a solution of nitric acid 0.5 M for 6 h to eliminate the excess metal.

### Example 4: Characterisation of the nanocomposite.

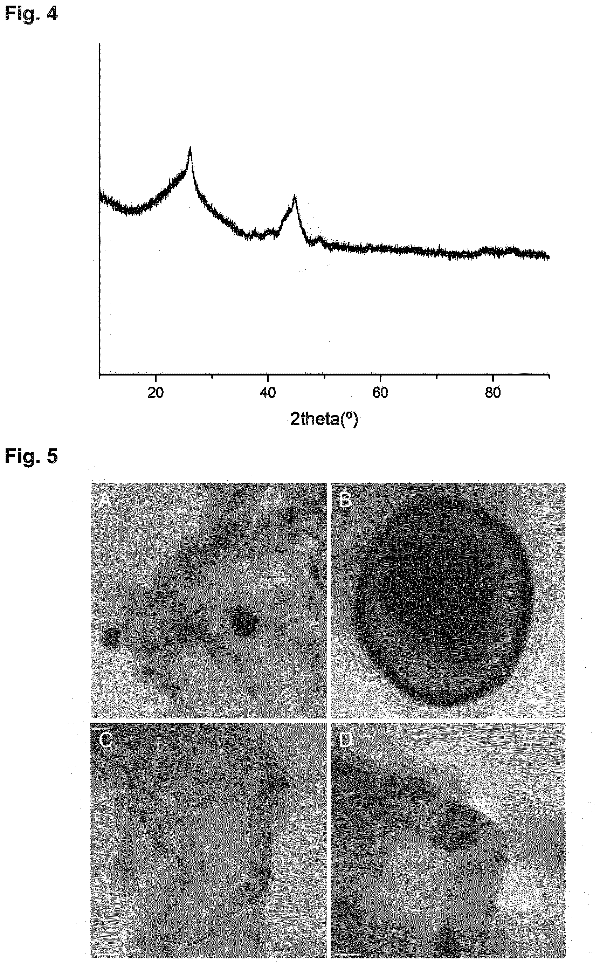

X-ray measurements (XRPD) confirm the presence of small traces of iron nanoparticles in the nanocomposite, showing the characteristic peaks of metallic iron and graphite carbon (Figure 4).

On the other hand, the images of the high-resolution transmission electron microscope (HRTEM) show that the structure of the nanocomposite consists of a graphitised carbon matrix, with iron nanoparticles of approximately 10 to 30 nm in size, as can be seen in Figure 5 A. Said nanoparticles found in the carbonate matrix are also surrounded by layers of graphene (Figure 5 B). The formation of carbon nanostructures, such as nano-cells and graphene layers mentioned above, can also be clearly observed (Figure 5 C and D).

The scanning electron microscope (SEM) images of the nanocomposite (**¡Error! No se encuentra el origen de la referencia.6**) show how, after heating, the nanocomposite loses the geometric structure observed in the ZIF. Furthermore, a structure can be seen with different layers of graphene and many "dimples" that correspond to the pores that provide the high specific area to the nanocomposite.

**Table 1. Percentages of carbon, nitrogen, and oxygen of the composite obtained by X-ray spectroscopy (XRS).**

| ***C (at. %)*** | ***N (at. %)*** | ***O (at. %)*** |
|---|---|---|
| *90.71* | *1.10* | *8.19* |

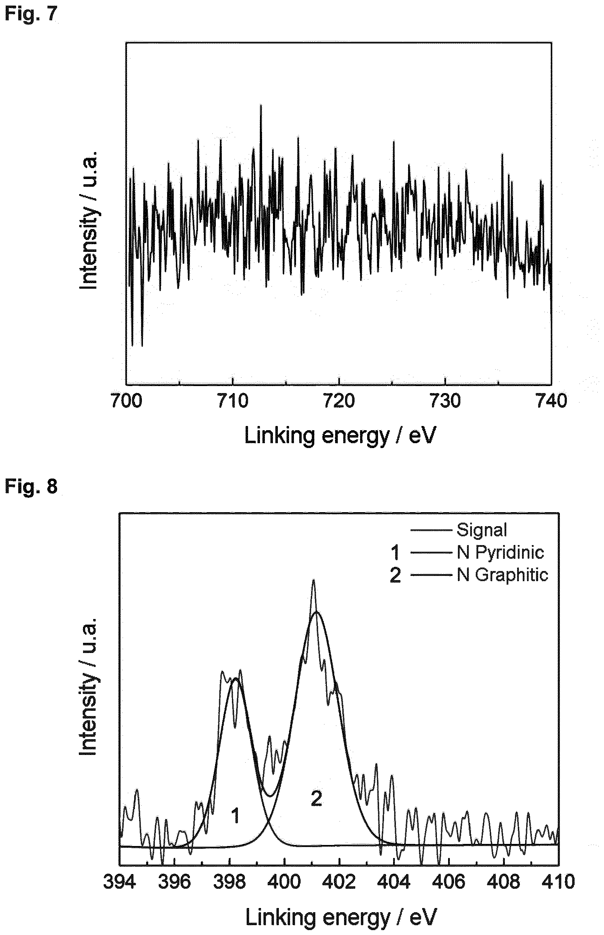

The X-ray spectroscopy (XRS) measurements show that the nanocomposite has a percentage of 90.7, 8.2, and 1.1 percent of atomic carbon, oxygen, and nitrogen, respectively (Table 1), demonstrating that there is nitrogen doping. In said measurement, iron is not detected as it is a superficial measurement, and the nanoparticles are surrounded by several layers of carbon as can be seen in HRTEM images. With regard to nitrogen, we can see in Figure 8 that the pyridinic and graphitic nitrogen predominate in the nitrogen doping (Table 2).

**Table 2. Percentages of the different types of N obtained using XRS.**

| **Pyridinic nitrogen** | **Graphitic nitrogen** |
|---|---|
| *34.5* | *65.5* |

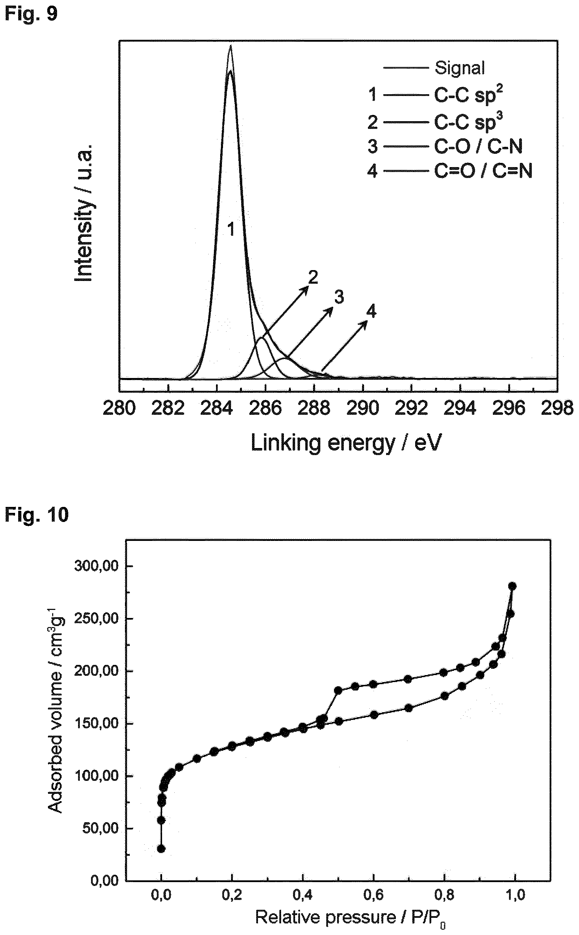

The nitrogen doping is very important in this type of composites, as it induces electronic interaction with nearby carbon/metal atoms to provide active catalytic areas and also produces structural defects in the carbon nanoforms to form oxygen adsorption sites. Finally, Figure 9 shows the carbon signal, which can be deconvoluted into four different peaks, of which we obtain the proportions of the different types of carbon shown in Table 3.

**Table 3. Percentages of the different types of carbon obtained using XRS.**

| | **C-C sp²** | **C-C sp³** | **C-O / C-N** | **C=O/C=N** |
|---|---|---|---|---|
| **%** | *82.61* | *9.62* | *6.85* | *0.92* |

The inductively coupled plasma atomic emission spectroscopy (ICP-OES) analyses indicate that the nanocomposite contains 0.79% of iron by weight.

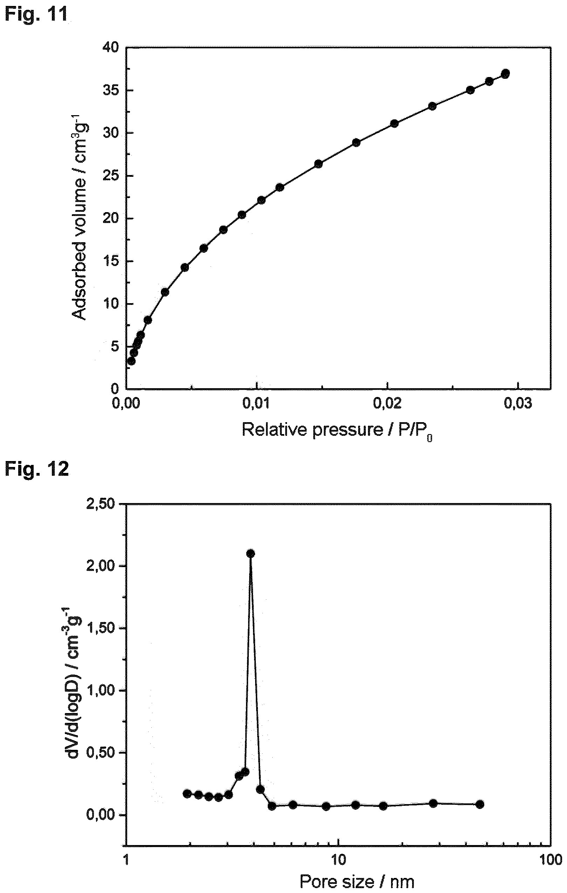

To estimate the surface area of the nanocomposite, the porous texture of the nanocomposite was characterised by nitrogen adsorption assays (N₂) at 77 K and carbon dioxide adsorption assays (CO₂) at 273 K (Figures 10 to 12). AUTOSORB-6 equipment was used for this purpose. The samples were degassed for 8 hours at 523 K and 5.10⁻⁵ bar before being analysed. The surface areas were estimated according to the BET model, and the pore size dimensions were calculated using the solid density functional theory (QSDFT) for the adsorption branch assuming a cylindrical pore model. The micropore volumes were determined by applying t-plot and DR methods to the N₂ and CO₂ adsorption data.

**Table 2. Porosity data obtained by adsorption measures, from the nitrogen and carbon dioxide isotherms.**

| S_{BET}^{a} | t-plot | | Vₜ^{b} | V_{µ(<0.7 nm)} ^{c} | V_{µDR}^{d} | Vₘₑₛₒ^{e} | V_{meso (P/P0=0.7)}^{f} |
|---|---|---|---|---|---|---|---|
| (m²g⁻¹) | S_{µ}^{a} (m²g⁻¹) | S_{T}^{a} (m²g⁻¹) | (cm ³g⁻¹) | (cm ³g⁻¹) | (cm ³g⁻¹) | (cm ³g⁻¹) | (cm ³g⁻¹) |
| *462.71* | *363.39* | *99.33* | *0.96* | *0.121* | *0.181* | *0.780* | *0.297* |

| | | | | | | | |
|---|---|---|---|---|---|---|---|
| ^{a} Data obtained from the N₂ adsorption. Specific area calculated using the BET method. Area contributed by micropores S_{µ} and external area S_{T} using the t-plot method. ^{b} Total Volume at P/P₀ = 0.96. ^{c} Data obtained from the CO₂ adsorption. The micropore volume (<0.7 nm) calculated according to the DR method. ^{d} Micropore volume calculated by N₂ adsorption using the DR method. ^{e} Calculated mesopore volume according to: Vₘₑₛₒ =V_{Total} - V_{µDR}. ^{f} Mesopore volume (_{Vmeso (P/P0)}) calculated from the difference between the total (Vₜ) at P/P₀ and the micropore volume (V_{micro}). | | | | | | | |

The nitrogen isotherms show an IV type adsorption, whose values are illustrated in Table 4, showing a specific area of 463 m²g⁻¹. The pore volume of the nanocomposite is 0.96 cm³g⁻¹, indicating a distribution of micropores and mesopores of approximately 3 nm. For a better micropore study of less than 0.7 nm in size, CO₂ adsorption measurements were made at 273 K. In this case, the measurements indicate a micropore volume of 0.12 cm³g⁻¹ (Figures 10 to 12).

The electrocatalytic behaviour of the nanocomposite of the present invention was characterised by different electrochemical measurements in a typical 3-electrode cell. Different electrolytes with different concentrations (i.e. media with different pH) were used for said measurements, always using a stainless steel sheet and an Ag/AgCl electrode as a counterelectrode and reference electrode respectively. Each working electrode used the different nanocomposites, embedded in nickel foam for the basic media and in carbon felt for the acid media, (to prevent the reaction between nickel foam and the acid) of an area of 0.2 cm². The deposition of the nanocomposites was carried out by preparing a suspension of the material to be analysed with polyvinylidene difluoride (PVDF) and carbon black (ratio 80:10:10) in ethanol. Once it was deposited in the nickel foam or carbon felt, it was allowed to dry for two h at 80 °C. Basic media (1 M and 0.1 M KOH), acid media (0.5 M H₂SO₄), and a neutral medium (phosphate buffer of pH 7) were used to study the electrocatalytic activity of the nanocomposite.

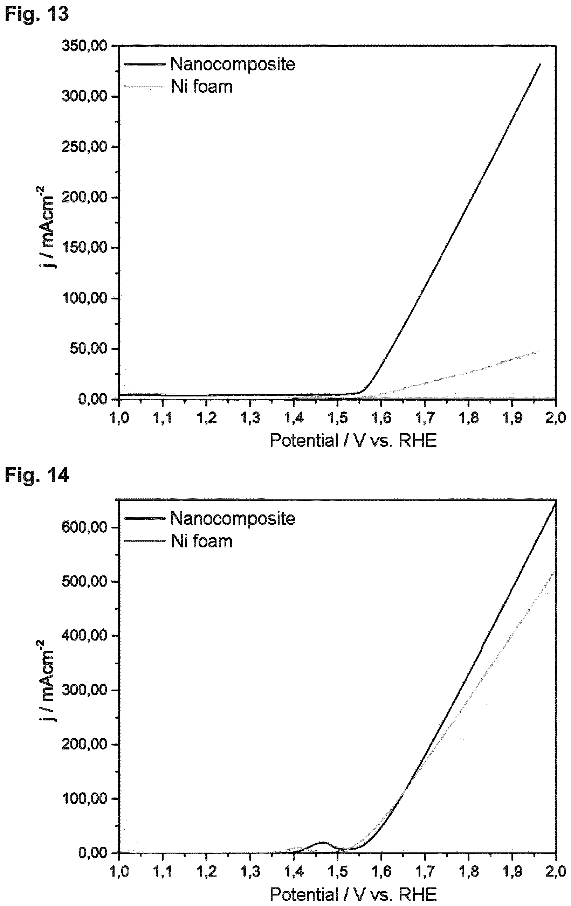

To measure their behaviour as an oxygen catalyst (OER), it was tested in two basic media (KOH 0.1 and 1 M). Linear voltammetry measurements were performed, showing the beginning of catalysis at 1.542 V and 1.588 V (vs RHE) for the 0.1 M and 1 M KOH media, respectively. As can be seen in Figures 13 and 14, we see that the values obtained with the nanocomposite with respect to their respective targets are much higher, showing that the nanocomposite of the present invention has a high electrocatalytic behaviour.

**Table 5. Voltage values for the beginning of oxygen catalysis of the material in different media.**

| OER | KOH 1 M | KOH 0.1 M |
|---|---|---|
| V (vs RHE) | *1.588* | *1.542* |

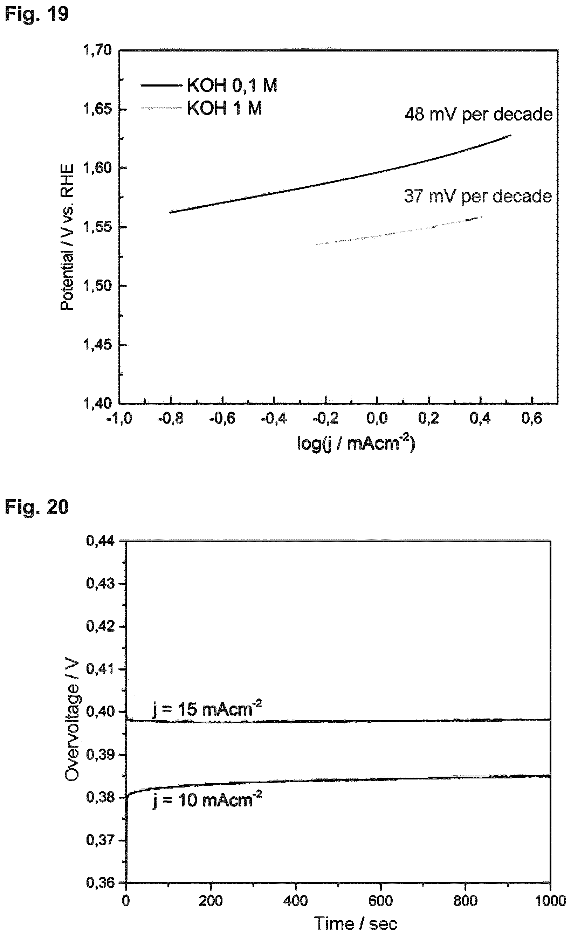

For a better characterisation of its catalytic behaviour other parameters were calculated, such as the overvoltage (η) obtained at different current densities (10 and 15 mA·cm⁻²); the current density (*j*) at an overvoltage of η = 300 and 400 mV; and the Tafel slopes in the different media. In Figure 19, we can see the Tafel slopes in the two basic media, obtaining very low values of 48 and 37 mV per decade for 0.1 M and 1 M KOH respectively.

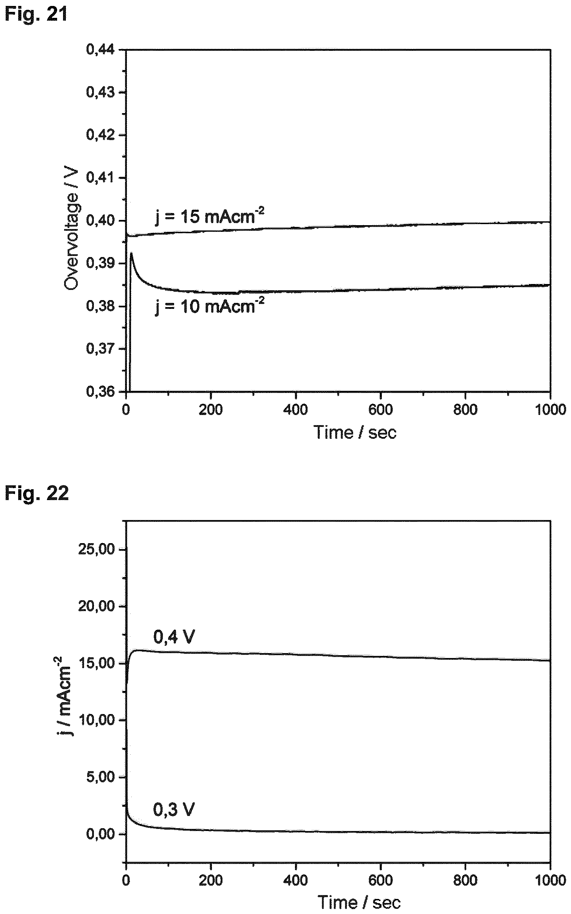

The stability and durability of the nanocomposite of this invention were tested by means of a galvanostatic test applying continuous current densities of *j* = 10 and 15 mA·cm⁻², and by potentiometric tests applying an overvoltage of η = 300 and 400 mV, for 1000 seconds in both cases. As can be seen in Figures 20 to 22, very good stability is observed in both media, obtaining practically constant values of current density and overvoltage.

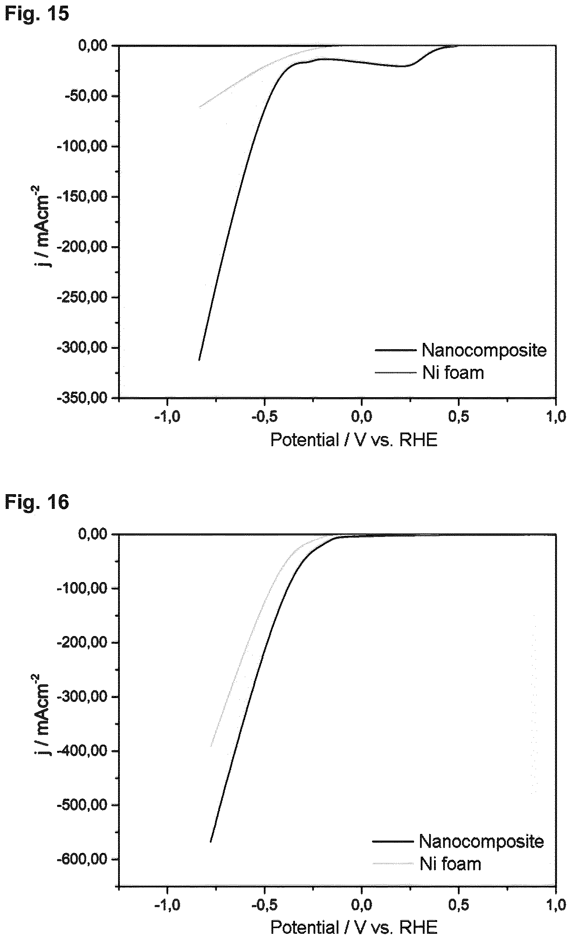

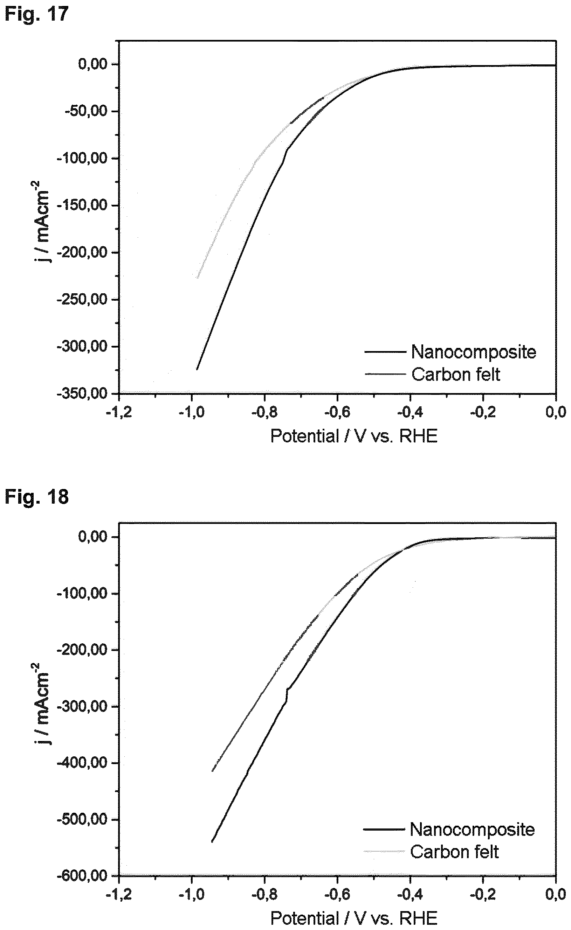

Finally, the behaviour of the nanocomposite of the present invention was measured as a hydrogen catalyst (HER), tested in basic media (KOH 0.1 and 1 M), acid media (H₂SO₄ 1 and 0.5 M), and in neutral medium (pH 7 phosphate buffer). Linear voltammetry measurements were performed, showing the initiation of catalysis always above the corresponding target measurement in that medium, as shown in Figures 15 to 18. The beginning values of hydrogen catalysis in the different media can be seen in Table 6.

**Table 3. Beginning voltage values of hydrogen catalyst of the material in different media.**

| HER | KOH 1 M | KOH 0.1 M | H₂SO₄ 1 M | H₂SO₄ 0.5 M | Buffer pH 7 |
|---|---|---|---|---|---|
| V (vs RHE) | *-0.398* | *-0.319* | *-0.514* | *-0.659* | *-0.762* |

### Example 4: Characterisation of iron ZIF

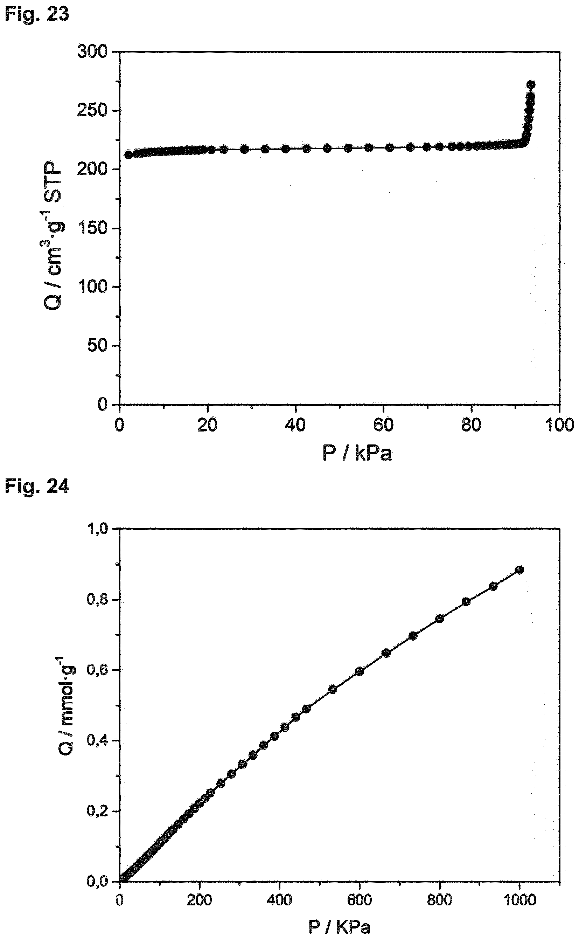

The zeolitic framework of the present invention is porous, as can be seen in Figure 2b. To estimate the surface area of the iron ZIF, the porous texture of the iron ZIF was characterised by nitrogen adsorption assays (N₂) at 77 K and carbon dioxide adsorption assays (CO₂) at 273 K (Figures 23 and 24). AUTOSORB-6 equipment was used for this purpose. The samples were degassed for 8 hours at 523 K and 5.10⁻⁵ bar before being analysed. The surface areas were estimated according to the BET model, and the pore size dimensions were calculated using the solid density functional theory (QSDFT) for the adsorption branch assuming a cylindrical pore model. The micropore volumes were determined by applying t-plot and DR methods to the N₂ and CO₂ adsorption data.

The ZIF of the present invention presents BET area values always greater than 400 m²/g and up to 1,200 m²/g after cleaning the pore by activation of the material.

The ZIF of the present invention presents micropore volume values between 0.3 and 0.6 cm³·g⁻¹.

## Claims

1. A zeolitic framework comprising the general structure A-B-A wherein A is iron, and B is a compound of formula I 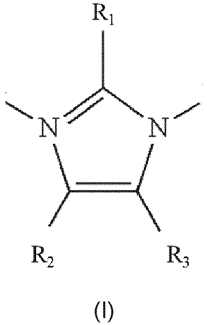
wherein R₁, R₂ and R₃ are independently hydrogen, C₁₋₄ alkyl, halo, cyano, or nitro,
wherein R₂ and R₃ are C₁₋₄ alkyl, R₂ and R₃ can be joined together to form a cycle of 3 to 7 carbons.

2. The zeolitic framework according to claim 1, wherein the compound of formula I is imidazolate or 2-methylimidazolate.

3. The zeolitic framework according to any one of claims 1 or 2, wherein the compound of formula I is 2-methylimidazolate.

4. The zeolitic framework according to any one of claims 1 to 3, wherein said framework has a SOD zeolitic topology.

5. The zeolitic framework according to any one of claims 1 to 4, wherein said framework has the crystallographic structure of the ZIF-8.

6. The zeolitic framework according to any one of claims 1 to 5, wherein said zeolitic framework has a micropore volume greater than 0.15 cm³ g⁻¹, preferably greater than 0.3 cm³·g⁻¹, calculated using adsorption assays.

7. The zeolitic framework according to any one of claims 1 to 6, wherein said zeolitic framework has a BET area greater than 100 m²/g, preferably greater than 200 m²/g, and more preferably greater than 400 m²/g, calculated by adsorption assays.

8. A process for obtaining the zeolitic framework according to any one of claims 1 to 7, comprising the following steps:
a. mixing ferrocene and a compound of formula I as described in claim 1, in the presence of a template ligand,
b. heating the sealed mixture of step (a) to a temperature between 80 and 250 °C for at least 12 hours.

9. The process according to claim 8, wherein the compound of formula I is 2-methylimidazolate.

10. The process according to any one of claims 8 or 9, wherein the template ligand is solid at 25 °C.

11. The process according to any one of claims 8 to 10, wherein the mixture of step (a) is prepared in the absence of a solvent.

12. The process according to any one of claims 8 to 11, wherein the template ligand is an aromatic heterocycle.

13. The process according to any one of claims 8 to 12, wherein the template ligand is an aromatic heterocycle, wherein the heteroatom is nitrogen.

14. The process according to any one of claims 8 to 13, wherein the template ligand is a pyridine, a pyridine derivative, an imidazole, or an imidazole derivative.

15. The process according to any one of claims 8 to 14, wherein the template ligand is either a bipyridine or a bipyridine derivative or a benzimidazole or a benzimidazole derivative.

16. The process according to any one of claims 8 to 15, wherein the template ligand is 4.4-bipyridine or 2-methylbenzimidazole.

17. The process according to claim 16 wherein the molar ratio of the template ligand:formula I compound in the mixture of step (a) is less than 1.

18. The process according to any one of claims 8 to 17, wherein step (b) is carried out at a temperature between 110 and 200 °C.

19. The process according to any one of claims 8 to 18, wherein step (b) is carried out at a temperature between 140 and 160 °C.

20. The process according to any one of claims 8 to 19, wherein step (b) has a duration of between 2 and 6 days.

21. The process according to any one of claims 8 to 20, wherein step (b) has a duration of between 3.5 and 4.5 days.

22. A nanocomposite, comprising:
a graphite carbon matrix and between 0.1 and 3 % by weight of iron nanoparticles with respect to the total weight of the nanocomposite,
wherein said iron nanoparticles have a diameter of between 1 and 60 nm,
wherein said nanocomposite comprises between 70 and 95 % by weight of carbon, between 3 and 20 % by weight of oxygen, and between 0.2 and 5 % by weight of nitrogen with respect to the total weight of the nanocomposite,
and wherein said nanocomposite has a current density in the oxygen evolution reaction (OER) greater than 200 mA/cm² in KOH 1M.

23. The nanocomposite according to claim 22, wherein the pore size is 0.5 to 15 nm, calculated by adsorption assays.

24. The nanocomposite according to any one of claims 22 or 23, wherein the pore size is 1 to 10 nm, calculated by adsorption assays.

25. The nanocomposite according to any one of claims 22 to 24, wherein the pore size is 3 to 5 nm, calculated by adsorption assays.

26. The nanocomposite according to any one of claims 22 to 25, wherein the pore volume is 0.1 to 2 cm³ g⁻¹, calculated by adsorption assays.

27. The nanocomposite according to any one of claims 22 to 26, wherein the pore volume is 0.5 to 1.5 cm³ g⁻¹, calculated by adsorption assays.

28. The nanocomposite according to any one of claims 22 to 27, wherein the pore volume is 0.9 to 1.1 cm³ g⁻¹, calculated by adsorption assays.

29. The nanocomposite according to any one of claims 22 to 28, wherein the micropore volume is 0.01 to 1 cm³ g⁻¹, calculated by adsorption assays.

30. The nanocomposite according to any one of claims 22 to 29, wherein the micropore volume is 0.05 to 0.5 cm³ g⁻¹, calculated by adsorption assays.

31. The nanocomposite according to any one of claims 22 to 30, wherein the micropore volume is 0.09 to 0.11 cm³ g⁻¹, calculated by adsorption assays.

32. The nanocomposite according to any one of claims 22 to 31, wherein the BET area is greater than 100 m²/g, calculated by adsorption assays.

33. The nanocomposite according to any one of claims 22 to 32, wherein the BET area is greater than 200 m²/g, calculated by adsorption assays.

34. The nanocomposite according to any one of claims 22 to 33, wherein the BET area is greater than 400 m²/g, calculated by adsorption assays.

35. The nanocomposite according to any one of claims 22 to 34, wherein said nanocomposite comprises between 80 and 94 % by weight of carbon, between 5 and 15 % by weight of oxygen, and between 0.5 and 3 % by weight of nitrogen, and between 0.3 to 2 % by weight of iron, with respect to the total weight of the nanocomposite.

36. The nanocomposite according to any one of claims 22 to 35, wherein said nanocomposite comprises between 90 and 92 % by weight of carbon, between 7 and 9 % by weight of oxygen, and between 0.8 and 1.2 % by weight of nitrogen, and between 0.7 and 0.9 % by weight of iron, with respect to the total weight of the nanocomposite.

37. The nanocomposite according to any one of claims 22 to 36, wherein the iron nanoparticles have a diameter between 5 and 45 nm.

38. The nanocomposite according to any one of claims 22 to 37, wherein the iron nanoparticles have a diameter between 10 and 30 nm.

39. The nanocomposite according to any one of claims 22 to 38, wherein said nanocomposite has a current density in the oxygen evolution reaction (OER) greater than 230 mA/cm² in KOH 1M.

40. The nanocomposite according to any one of claims 20 to 37, wherein said nanocomposite has a current density in the oxygen evolution reaction (OER) greater than 300 mA/cm² in KOH 1M.

41. A process for obtaining a nanocomposite according to any one of claims 22 to 40, comprising the following steps:
a. obtaining a zeolitic framework comprising the general structure A-B-A wherein A is iron, and B is a compound of formula I according to any one of claims 1 to 7 by means of a process according to any one of claims 8 to 21, and
b. heating the zeolitic framework obtained in step (a) at a temperature between 500 and 900 °C for at least 1 hour.

42. The process according to claim 41, wherein step (b) is carried out at a temperature between 600 and 800 °C.

43. The process according to any one of claims 41 or 42, wherein step (b) is carried out at a temperature between 680 and 720 °C.

44. The process according to any one of claims 41 to 43, wherein step (b) has a duration of at least 2 hours.

45. The process according to any one of claims 41 to 44, wherein step (b) has a duration of at least 3 hours.

46. A nanocomposite obtained by the process according to any one of claims 41 to 45.

47. Use of the nanocomposite according to any one of claims 22 to 40, or the nanocomposite according to claim 46, as a catalyst.
